# EUROPEAN PATENT APPLICATION

(11) **EP 1 887 124 A1**
(43) Date of publication of application: **13.02.2008**
(21) Application number: 06118508.8
(22) Date of filing: 07.08.2006
(51) Int. Cl.: D06F 37/20, D06F 39/12

(54) **Floor stabilizing foot for an appliance**

(71) Applicant: Electrolux Home Products Corporation N.V., 1930 Zaventem (BE)
(72) Inventor: Galassi, Stefano, 33070 Ranzano (IT); Spizzo, Fabio, 33084 Cordenons (IT); Giovagnoni, Marco, 33100 Udine (IT); Altinier, Fabio, 31013 Codogne (IT); Colombera, Giovanni, 33077 Sacile (IT)
(74) Representative: Jorio, Paolo

(57) **Abstract**

A floor stabilizing foot (4) for an appliance (1), having: a large base (17); a stem (18) connected to the base (17) and to a casing (2) of the appliance (1) ; and a damping foil (19), which is interposed transversely between the base (17) and the stem (18), works in shear, and is made of viscoelastic material.

## Description

### TECHNICAL FIELD

The present invention relates to a floor stabilizing foot for an appliance.

The floor stabilizing foot of the present invention may be used to particular advantage in a washing machine, to which the following description refers purely by way of example.

### BACKGROUND ART

When a washing machine rests on a flexible floor (e.g. a wooden floor, a soft floor, or a floor resting on a thin slab), the vibration generated by the washing machine (especially during the spin cycle) may be resonance-amplified to an unacceptable noise level.

Various design solutions have been proposed for a washing machine floor foot capable of stablizing the washing machine by damping machine vibration. A few examples are described in the following documents.

US5344116 describes a machine foot having a top section for connection to the bottom of the machine, and a bottom section resting on the floor; and a vibration-damping spring is interposed operatively between the top and bottom sections. In a preferred embodiment, an elastically deformable ring is also interposed between the top and bottom sections to divert at least one component of a vertically effective force radially into the bottom section by friction, which also provides for damping vibration of the machine to which the foot is fitted.

US2005116134 describes a washing machine supporting apparatus, which automatically controls the level of the washing machine and reduces in-service noise and vibration of the machine.

EP0393217 relates to a supporting foot having a threaded shaft; and a head formed on the end of the shaft and enclosed in a plastic casing. To ensure sufficient vibration damping and good slip resistance under load of the supporting foot, provision is made for a number of knobs which rest on the floor.

DE3444237 describes an adjustable-height damping device specially designed for washing machines.

US4632356 describes a vertically-adjustable, shock-absorbing mounting device for a washing machine.

None of the washing machine floor foot design solutions proposed so far, however, has been successful in terms of both easy, low-cost production and damping performance.

### DISCLOSURE OF INVENTION

It is an object of the present invention to provide a floor stabilizing foot for an appliance, designed to improve the stability of the appliance and eliminate the aforementioned drawbacks, and which is cheap and easy to produce.

According to the present invention, there is provided a floor stabilizing foot for an appliance, as claimed in the accompanying Claims.

### BRIEF DESCRIPTION OF THE DRAWINGS

A non-limiting embodiment of the present invention will be described by way of example with reference to the accompanying drawings, in which:
Figure 1 shows a schematic side view of a washing machine having four floor stabilizing feet in accordance with the present invention;
Figure 2 shows a schematic side view of a floor stabilizing foot of the Figure 1 washing machine;
Figure 3 shows a schematic side view of an alternative embodiment of the Figure 2 floor stabilizing foot; and
Figure 4 shows a schematic side view of an alternative embodiment of a floor stabilizing foot of the Figure 1 washing machine;
Figure 5 shows a view in perspective of the Figure 4 floor stabilizing foot;
Figure 6 shows an exploded view in perspective of the Figure 4 floor stabilizing foot; and
Figure 7 shows a further exploded view in perspective of the Figure 4 floor stabilizing foot.

### PREFERRED EMBODIMENTS OF THE INVENTION

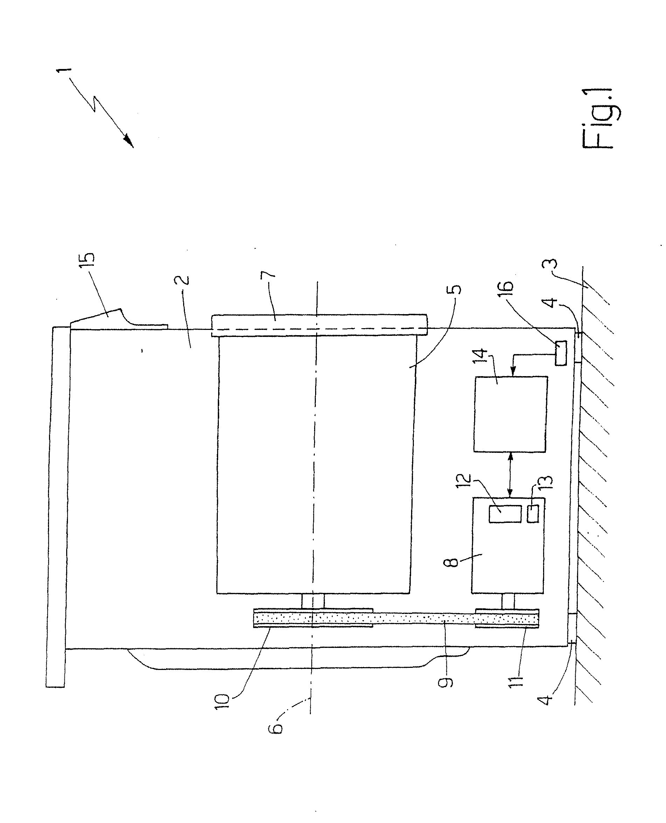

Number 1 in Figure 1 indicates as a whole a washing machine comprising a casing 2 resting on a floor 3 on a number of feet 4. Casing 2 supports a revolving drum 5 (defining a wash tub) which rotates about a horizontal rotation axis 6 (in alternative embodiments not shown, rotation axis 6 may be tilted or vertical), and front access to which is closed by a door 7 hinged to casing 2.

Drum 5 is rotated about rotation axis 6 by an electric motor 8 connected to drum 5 by a transmission system, which comprises a belt 9 connecting a pulley 10, fitted to the shaft of drum 5, directly to a pulley 11 fitted to the shaft of electric motor 8. In an alternative embodiment not shown, electric motor 8 is coaxial with drum 5, and the shaft of drum 5 is connected rigidly to the shaft of electric motor 8.

Electric motor 8 is equipped with a drive system 12; and a tachometer generator 13 (or other equivalent speed-sensing device) for measuring the speed of electric motor 8 and therefore the rotation speed of drum 5. Drive system 12 of the motor is preferably operated on the basis of the difference between the command (desired) speed and the actual speed as read by tachometer generator 13.

Washing machine 1 also comprises a control unit 14, which receives user commands from a user interface 15, and controls overall operation of washing machine 1. Control unit 14 is connected to at least one machine vibration-sensing accelerometer 16. In an alternative embodiment not shown, vibration-sensing accelerometer 16 is replaced by a different type of motion sensor.

Control unit 14 implements a known method of analysing machine vibration to determine the rotation speeds at which machine vibration is maximum and/or minimum and so identify the rotation speeds at which resonance phenomena occur. During normal use, drum 5 is obviously rotated at different speeds from those at which resonance phenomena occur. The method of determining the rotation speeds at which machine vibration is maximum and/or minimum may be performed only once, after the washing machine is actually installed, may be performed at given periods, or may be performed at each cycle.

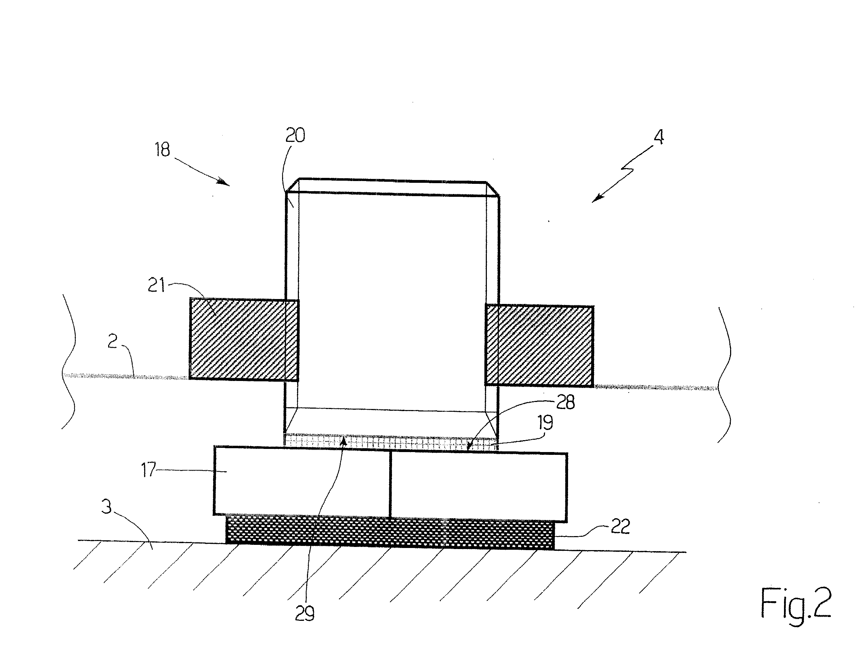

As shown in figure 2, each floor stabilizing foot 4 comprises a large base 17 (preferably made of rigid plastic material); and a stem 18 (preferably made of metal or rigid plastic material), which is connected to base 17 and casing 2 of washing machine 1. Between base 17 and stem 18 is interposed transversely a damping foil 19, which works in shear, is made of preferably high-damping (high-loss-factor) viscoelastic material, and is bonded to base 17 and stem 18. In particular, damping foil 19 may be glued, or may adhere naturally with no adhesive used, and may, for example, be 0.2 to 0.6 mm thick.

Damping foil 19 dissipates energy to reduce vibration peaks during the spinning cycle of washing machine 1. Accordingly, the stability of washing machine 1 is greatly increased, when resonance peaks are crossed, by cutting off over 50% vibration.

Stem 18 is preferably cylindrical, and comprises a threaded top portion 20 which screws inside a nut 21 fixed rigidly to casing 2 of washing machine 1; and a rubber friction layer 22 is fitted to a bottom surface of base 17, contacting floor 3.

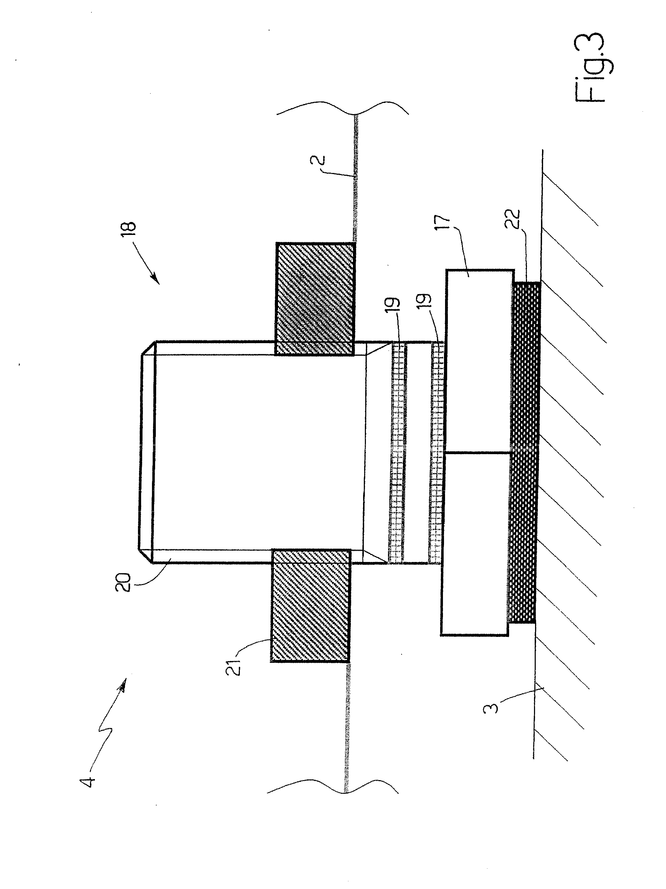

In the Figure 3 embodiment, each floor stabilizing foot 4 comprises two separate damping foils 19 arranged a given vertical distance apart. More (e.g. three or four) damping foils 19 may, of course, be used in special cases.

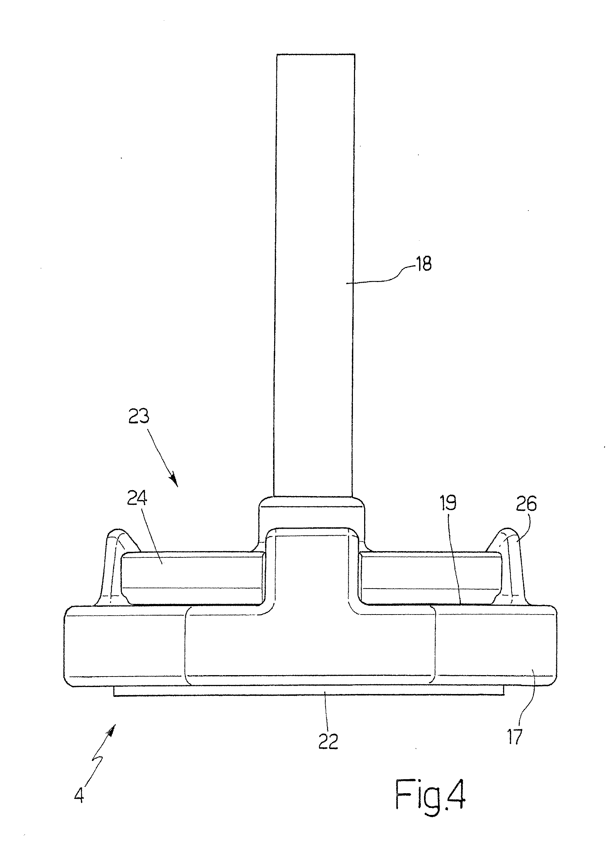

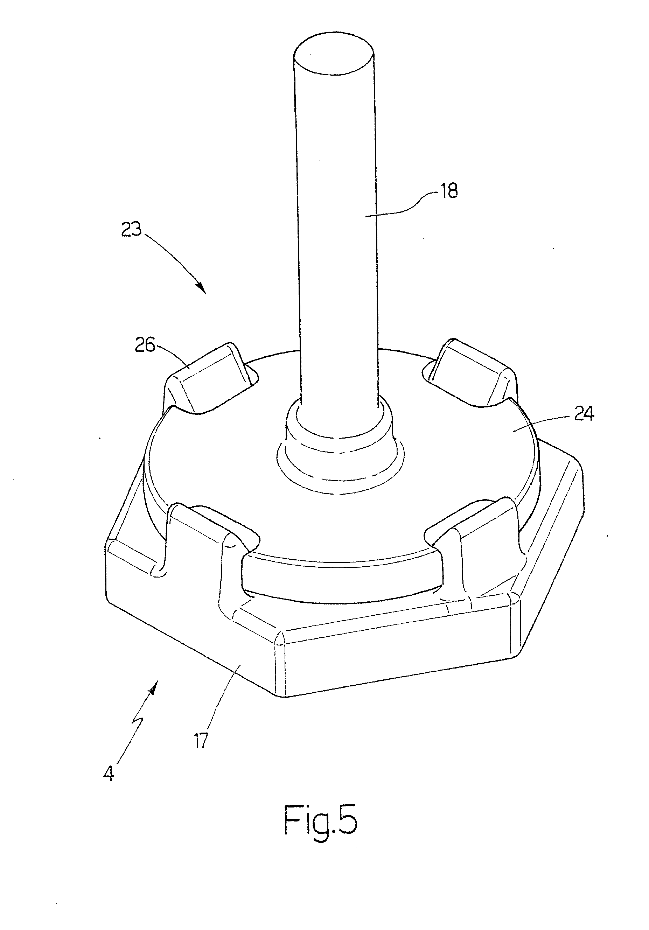

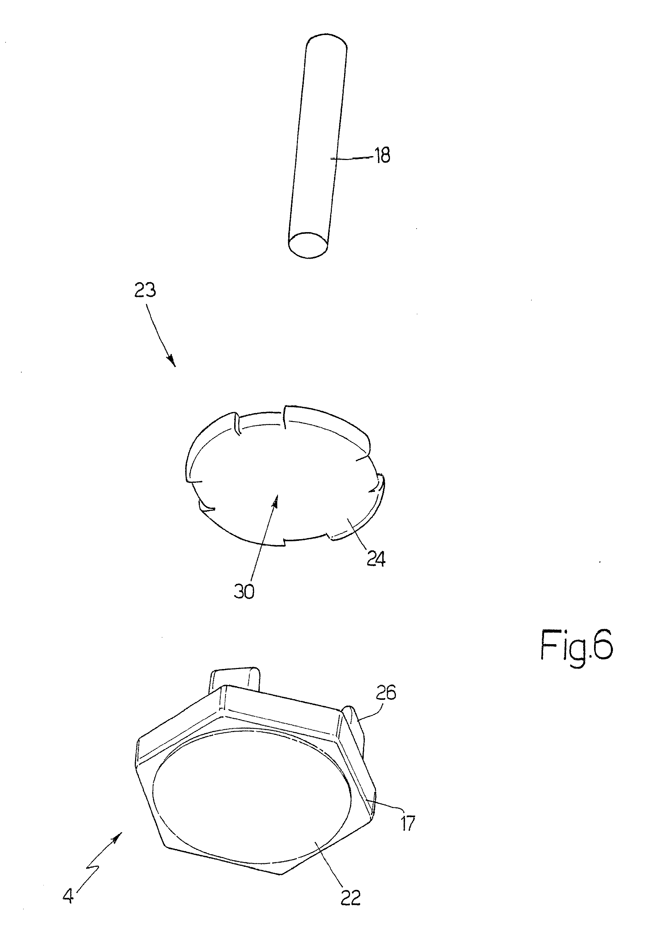

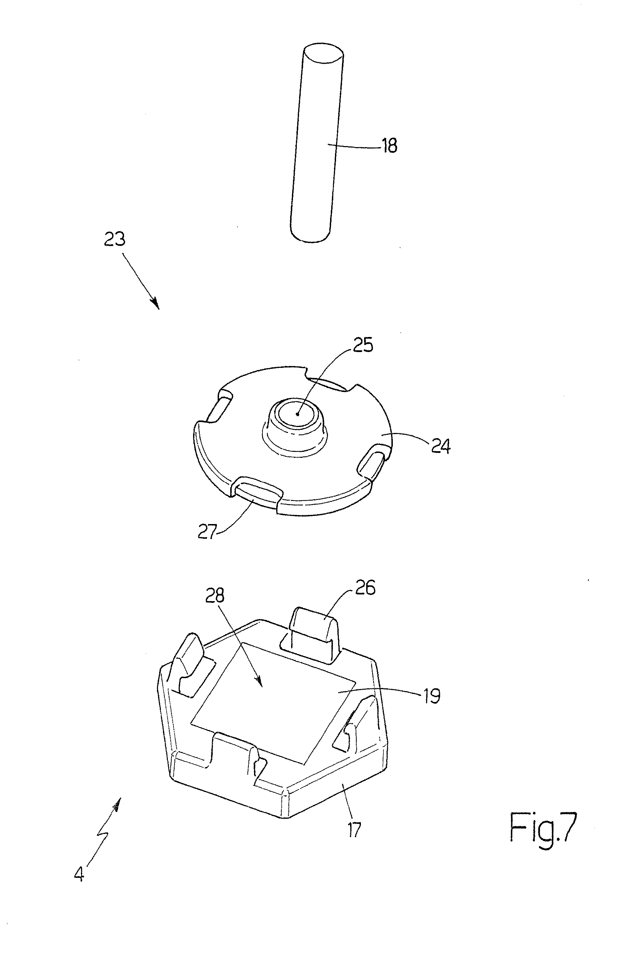

In the Figure 4-7 embodiment, each floor stabilizing foot 4 also comprises a connecting member 23, which connects base 17 mechanically to stem 18 with a certain amount of clearance to limit maximum deformation of damping foil 19. In other words, connecting member 23 acts as a "limit stop" to limit maximum deformation of damping foil 19 and so protect damping foil 19 in the event of severe mechanical stress (as, for example, when washing machine 1 is pushed manually into a different position on floor 3). It should be pointed out that, to dissipate energy to reduce vibration peaks during the spinning cycle of washing machine 1, damping foil 19 needs a small amount of movement, which is freely permitted by connecting member 23, which only acts in the event of unusual mechanical stress. The clearance of connecting member 23 may range between 0.1 mm and 0.3 mm, and, in particular, is about 0.2 mm.

Connecting member 23 preferably comprises a plate 24 having a central hole 25 for supporting stem 18; a number of (in particular, four) hooks 26 projecting from base 17; and a number of seats 27, each formed in plate 24 to loosely receive a respective hook 26. Damping foil 19 is located between base 17 and plate 24 of connecting member 23.

In the Figure 2 embodiment, both a top surface 28 of base 17, contacting damping foil 19, and a bottom surface 29 of stem 18, contacting damping foil 19, are flat. In the Figure 4-7 embodiment, top surface 28 of base 17 is flat, and a bottom surface 30 of plate 24, contacting damping foil 19, is spherical (in an equivalent embodiment, bottom surface 30 of plate 24 is flat, and top surface 28 of base 17 is spherical). The spherical shape of bottom surface 30 of plate 24 limits transmission of bending moments through floor stabilizing foot 4. In other words, when bottom surface 30 of plate 24 is spherical, plate 24 (and therefore stem 18 and washing machine 1) tends to slide on base 17 resting on floor 3; which sliding movement allows damping foil 19 to work in shear, with no wedging of surfaces 28 and 30 contacting damping foil 19, and therefore in the best condition to ensure a high degree of damping performance.

It should be pointed out that damping foil 19 may be smaller than base 17 and plate 24, due to the spherical shape of bottom surface 30 of plate 24, and may therefore also be square. Furthermore, top surface 28 of base 17 may have a seat for housing damping foil 19.

Floor stabilizing foot 4 as described above has numerous advantages, by being easy and cheap to produce, and by providing for superior damping performance.

Though particularly advantageous for a washing machine, the above floor stabilizing foot 4 also applies to any other kind of laundry machine, such as a drier or a washer-drier, or to any other kind of household appliance.

## Claims

1. A floor stabilizing foot (4) for an appliance (1), comprising:
a large base (17); and
a stem (18) connected to the base (17) and to a casing (2) of the appliance (1);
the floor stabilizing foot (4) being **characterized by** comprising at least one damping foil (19), which is interposed transversely between the base (17) and the stem (18), works in shear, and is made by viscoelastic material.

2. A floor stabilizing foot (4) as claimed in Claim 1, and comprising at least one connecting member (23), which connects the base (17) mechanically to the stem (18) with a certain amount of clearance to limit maximum deformation of the damping foil (19).

3. A floor stabilizing foot (4) as claimed in Claim 2, wherein the clearance of the connecting member (23) ranges between 0.1 mm and 0.3 mm.

4. A floor stabilizing foot (4) as claimed in Claim 3, wherein the clearance of the connecting member (23) is about 0.2 mm.

5. A floor stabilizing foot (4) as claimed in Claim 2, 3 or 4, wherein the connecting member (23) comprises a plate (24) supporting the stem (18); a number of hooks (26) projecting from the base (17); and a number of seats (27), each formed in the plate (24) to loosely receive a respective hook (26); the damping foil (19) being located between the base (17) and the plate (24) of the connecting member (23).

6. A floor stabilizing foot (4) as claimed in Claim 5, wherein a top surface (28) of the base (17), contacting the damping foil (19), is flat, and a bottom surface (30) of the plate (24), contacting the damping foil (19), is spherical.

7. A floor stabilizing foot (4) as claimed in Claim 5, wherein a top surface (28) of the base (17), contacting the damping foil (19), is spherical, and a bottom surface (30) of the plate (24), contacting the damping foil (19), is flat.

8. A floor stabilizing foot (4) as claimed in Claim 6 or 7, wherein the damping foil (19) is smaller than the base (17) and the plate (24) of the connecting member (23).

9. A floor stabilizing foot (4) as claimed in Claim 8, wherein the damping foil (19) is square.

10. A floor stabilizing foot (4) as claimed in Claim 8 or 9, wherein the top surface (28) of the base (17) has a seat for housing the damping foil (19).

11. A floor stabilizing foot (4) as claimed in any of Claims 1 to 4, wherein a top surface (28) of the base (17), contacting the damping foil (19), is spherical, and a bottom surface (29) of the stem (18), contacting the damping foil (19), is flat.

12. A floor stabilizing foot (4) as claimed in any of Claims 1 to 4, wherein a bottom surface (29) of the stem (18), contacting the damping foil (19), is spherical, and a top surface (28) of the base (17), contacting the damping foil (19), is flat.

13. A floor stabilizing foot (4) as claimed in any of Claims 1 to 12, wherein the damping foil (19) is 0.2 mm to 0.6 mm thick.

14. A floor stabilizing foot (4) as claimed in any of Claims 1 to 13, wherein the stem (18) is cylindrical, and comprises a threaded top portion (20) which screws inside a nut (21) fixed rigidly to the casing (2) of the appliance (1).

15. A floor stabilizing foot (4) as claimed in any of Claims 1 to 14, wherein the damping foil (19) is bonded to the base (17).

16. A floor stabilizing foot (4) as claimed in any of Claims 1 to 15, and comprising a friction layer (22) fitted to a bottom surface of the base (17).

17. A floor stabilizing foot (4) as claimed in any of Claims 1 to 16, and comprising two separate damping foils (19) arranged a given vertical distance apart.
